## Europäisches Patentamt

## European Patent Office

## Office européen des brevets

(11) Veröffentlichungsnummer: **0 607 869 B1**

(12) **EUROPÄISCHE PATENTSCHRIFT**

(45) Veröffentlichungstag der Patentschrift: **05.04.95**

(21) Anmeldenummer: **94100427.7**

(22) Anmeldetag: **13.01.94**

(51) Int. Cl.⁶: **C08G 77/50**, C08L 83/14

(54) **Alkenylgruppen aufweisende Siloxancopolymere, deren Herstellung und Verwendung.**

(30) Priorität: **14.01.93 DE 4300809**

(43) Veröffentlichungstag der Anmeldung:
**27.07.94 Patentblatt 94/30**

(45) Bekanntmachung des Hinweises auf die
Patenterteilung:
**05.04.95 Patentblatt 95/14**

(84) Benannte Vertragsstaaten:
**BE DE ES FR GB IT LU NL**

(56) Entgegenhaltungen:
**EP-A- 0 439 777**
**EP-A- 0 439 778**
**EP-A- 0 523 660**
**WO-A-92/21724**

(73) Patentinhaber: **Wacker-Chemie GmbH
Hanns-Seidel-Platz 4
D-81737 München (DE)**

(72) Erfinder: **Herzig, Christian, Dr.
Schröckenbauer 1
D-83373 Taching am See (DE)**
Erfinder: **Geck, Michael, Dr.
Einsteinstrasse 1
D-84489 Burghausen (DE)**
Erfinder: **Rengstl, Alfred, Dr.
Am Zoglerberg 8
D-84571 Reischach (DE)**
Erfinder: **Hockemeyer, Friedrich
Lärchenstrasse 22
D-84533 Marktl am Inn (DE)**
Erfinder: **Oswaldbauer, Helmut
Hartstrasse 1
D-94166 Stubenberg/Fürstberg (DE)**

**Beschreibung**

Die Erfindung betrifft Alkenylgruppen aufweisende, harzartige Siloxancopolymere sowie ein verfahren zu deren Herstellung. Weiterhin betrifft die Erfindung vernetzbare Zusammensetzungen, die Alkenylgruppen aufweisendes Siloxancopolymer, Si-gebundene Wasserstoffatome aufweisendes Organopolysiloxan und Katalysator enthalten, sowie die Verwendung der Zusammensetzungen.

Aus EP 217 333 B (Dow Corning Corp.; ausgegeben am 2. September 1992) werden xylollösliche, harzartige Copolymere beschrieben, die $SiO_2$-, Trimethylsiloxy- und Alkenyldimethylsiloxy-Einheiten enthalten und zur Regulierung von Trennkräften gegenüber Klebstoffen geeignet sind. Des weiteren wird in US 4,123,604 (Dow Corning Corp.; ausgegeben am 31. Oktober 1978) die Herstellung von harzartigen Siloxancopolymeren unter Verwendung von Vinyldimethylsiloxy-Einheiten beschrieben. Beiden Veröffentlichungen ist gemein, daß das Molekulargewicht der Copolymeren durch das Verhältnis der monomeren Siloxaneinheiten zu den quartären Siloxaneinheiten im Molekül bestimmt ist.

Es bestand die Aufgabe, Alkenylgruppen aufweisende Siloxancopolymere bereitzustellen, die in einem einfachen Verfahren hergestellt werden können.

Gegenstand der Erfindung sind
Alkenylgruppen aufweisende Siloxancopolymere enthaltend
(a) Siloxaneinheiten der Formel

$$R_a Si(OR^1)_b O_{\frac{4-(a+b)}{2}} \qquad (I),$$

worin
R      gleich oder verschieden sein kann und aliphatisch gesättigte organische Reste bedeutet,
$R^1$     gleiche oder verschiedene Alkylreste, die durch Ethersauerstoffatome substituiert sein können, oder Wasserstoffatom bedeutet,
a      0, 1, 2 oder 3,
b      0, 1 oder 2,
       und die Summe a + b nicht größer als 3 ist,
mit der Maßgabe, daß pro Molekül mindestens zwei Siloxaneinheiten (a) mit a + b = 0 vorhanden sind,
(b) je Molekül mindestens eine Siloxaneinheit der Formel

$$AR_c SiO_{\frac{3-c}{2}} \qquad (II),$$

worin
R      eine der obengenannten Bedeutung hat,
c      0, 1 oder 2 ist und
A      einen Rest der Formel

-$CH_2 CHR^3$-$R^2$-$CR^3 = CH_2$

bedeutet, wobei $R^2$ einen zweiwertigen Kohlenwasserstoffrest mit 1 bis 25 Kohlenstoffatomen und $R^3$ Wasserstoffatom oder einen Alkylrest bedeutet,
und

(c) je Molekül durchschnittlich mindestens eine Siloxaneinheit der Formel

$$O_{\frac{3-c}{2}}R_c Si\text{-}A^1\text{-}SiR_c O_{\frac{3-c}{2}} \qquad (III),$$

worin R und c eine der obengenannten Bedeutungen haben und $A^1$ einen Rest der Formel

$-CH_2 CHR^3\text{-}R^2\text{-}CHR^3 CH_2-$

bedeutet mit $R^2$ und $R^3$ gleich der obengenannten Bedeutung.

Beispiele für Reste R sind Alkylreste, wie der Methyl-, Ethyl-, n-Propyl-, iso-Propyl-, 1-n-Butyl-, 2-n-Butyl-, iso-Butyl-, tert.-Butyl-, n-Pentyl-, iso-Pentyl-, neo-Pentyl, tert.-Pentylrest; Hexylreste, wie der n-Hexylrest; Heptylreste, wie der n-Heptylrest; Octylreste, wie der n-Octylrest und iso-Octylreste, wie der 2,2,4-Trimethylpentylrest; Nonylreste, wie der n-Nonylrest, Decylreste, wie der n-Decylrest; Dodecylreste, wie der n-Dodecylrest; Octadecylreste, wie der n-Octadecylrest; Cycloalkylreste, wie Cyclopentyl-, Cyclohexyl-, Cycloheptylreste und Methylcyclohexylreste.

Beispiele für halogenierte Reste R sind Halogenalkylreste, wie der 3,3,3-Trifluor-n-propylrest, der 2,2,2,2',2',2'-Hexafluorisopropylrest und der Heptafluorisopropylrest.

Bevorzugt handelt es sich bei Rest R um einen Alkylrest mit 1 bis 4 Kohlenstoffatomen, wobei der Methylrest besonders bevorzugt ist.

Beispiele für Reste $R^1$ sind die für Rest R gleich Alkylrest genannten Beispiele sowie der Methoxyethyl- und Ethoxyethylrest.

Bevorzugt handelt es sich bei Rest $R^1$ um Alkylreste mit 1 bis 4 Kohlenstoffatomen, wobei der Methyl- und der Ethylrest besonders bevorzugt sind.

Beispiele für Alkylreste $R^3$ sind die für Rest R gleich Alkylrest genannten Beispiele.

Bevorzugt handelt es sich bei Rest $R^3$ um Wasserstoffatom und Alkylreste mit 1 bis 6 Kohlenstoffatomen, wobei Wasserstoffatom besonders bevorzugt ist.

Beispiele für den Rest $R^2$ sind $-(CH_2)-$, $-(CH_2)_2-$, $-(CH_2)_4-$, $-(CH_2)_6-$, $-(CH_2)_8-$, $-(CH_2)_{10}-$,

$$\begin{array}{cc} CH_3 & CH_3 \\ | & | \\ -CHCH_2CH- & , \end{array}$$

$-CH_2\text{-}CH_2\text{-}CH=CH\text{-}CH_2\text{-}CH_2-$ und $-C_6H_4-$, wobei $-(CH_2)_2-$, $-(CH_2)_4-$ und $-(CH_2)_6-$ bevorzugt und $-(CH_2)_2-$ besonders bevorzugt sind.

Beispiele für Rest A sind der 4-Pentenyl-, 5-Hexenyl-, 7-Octenyl-, 9-Decenyl-, 5,9-Decadienyl- und der 13-Tetradecenylrest, wobei der 5-Hexenyl- und der 9-Decenylrest bevorzugt sind.

Beispiele für Rest $A^1$ sind der 1,5-Pentandiyl-, 1,6-Hexandiyl-, 1,8-Octandiyl-, 1,10-Decandiyl-, 1,10-Dec-5-endiyl- und der 1,14-Tetradecandiylrest, wobei der 1,6-Hexandiyl- und der 1,10-Decandiylrest bevorzugt sind.

Die erfindungsgemäßen, Alkenylgruppen aufweisenden Siloxancopolymere haben den Vorteil, daß sie auch bei hohem durchschnittlichen Molekulargewicht mit aromatischen und aliphatischen Kohlenwasserstofflösemitteln und mit Polysiloxanen, insbesondere mit alkenylfunktionellen Siloxanen, wie z.B. alkenylfunktionellen Siloxancopolymeren gemäß der Anmeldung EP-A-0 523 660 (Wacker-Chemie GmbH), homogen mischbar sind. Des weiteren haben die erfindungsgemäßen Siloxancopolymere den Vorteil, daß sie mit Si-gebundenen Wasserstoff aufweisenden Organopolysiloxanen sehr schnell unlösliche Netzwerke bilden.

Vorzugsweise haben die 50 gewichtsprozentigen Lösungen der erfindungsgemäßen, Alkenylgruppen aufweisenden Siloxancopolymeren in Toluol bei 25°C eine Viskosität von 1 bis 100 mm²/s, besonders bevorzugt 2 bis 10 mm²/s.

Die erfindungsgemäßen, Alkenylgruppen aufweisenden Siloxancopolymeren bestehen vorzugsweise aus $SiO_2$-Einheiten (Q-Einheiten) und $R_3SiO_{1/2}$-, $AR_2SiO_{1/2}$- sowie $O_{1/2}R_2Si\text{-}A^1\text{-}SiR_2O_{1/2}$-Einheiten (M-Einheiten), wobei R, A und $A^1$ die oben dafür angegebene Bedeutung haben. Letztere Struktureinheit besteht in ihrer "Alkylen"-Funktion exakt aus einer Hälfte des symmetrischen Restes $A^1$. Definitionsgemäß sind daher zwei solcher "Alkylen"-Funktionen zum Rest $A^1$ verknüpft, wobei $A^1$ einen Kohlenwasserstoffblock zwischen zwei Siliciumatomen darstellt.

Bei den erfindungsgemäßen, Alkenylgruppen aufweisenden Siloxancopolymeren handelt es sich besonders bevorzugt um solche der Formel

$$[R_3SiO_{1/2}]_s \ [AR_2SiO_{1/2}]_t \ [A^1{}_{1/2}\text{-}SiR_2O_{1/2}]_u \ [SiO_2]_v$$

mit einem Verhältnis $(s+t+u)/v$ von 0,5 bis 1,5. Das Verhältnis $t/s$ beträgt vorzugsweise 0,05 bis 0,2, was eine sehr gute Vernetzungsfähigkeit mit Organosiloxanen, welche Si-gebundenen Wasserstoff aufweisen, bedingt. Der Kohlenwasserstoffbrückenanteil wird definiert durch den Quotienten $u/(s+t)$, welcher vorzugsweise im Bereich von 0,01 bis 0,2 liegt.

In den Siloxan-Einheiten (a) der Formel (I) ist b bevorzugt 0. Herstellungsbedingt können die erfindungsgemäßen, Alkenylgruppen aufweisenden Siloxancopolymere jedoch geringe Mengen an Alkoxygruppen aus unvollständiger Hydrolyse und/oder Hydroxygruppen aus unvollständiger Kondensation enthalten. Vorzugsweise beträgt der Alkoxygehalt weniger als 5 Mol-%, bezogen auf die Gesamtheit aller Siliciumatome im Siloxancopolymer, und der Hydroxygehalt weniger als 0,5 Gewichtsprozent, bezogen auf das Gesamtgewicht des Siloxancopolymer.

Besonders bevorzugt enthalten die erfindungsgemäßen, Alkenylgruppen aufweisenden Siloxancopolymere je Molekül durchschnittlich mindestens zwei Siloxaneinheiten der Formel $AR_2SiO_{1/2}$.

Ein weiterer Gegenstand der Erfindung ist ein Verfahren zur Herstellung von Alkenylgruppen aufweisenden Siloxancopolymeren, dadurch gekennzeichnet, daß
in einer 1. Stufe
mindestens ein Silan der Formel

$$R_dSi(OR^4)_{4-d} \qquad (IV),$$

wobei

R die obengenannte Bedeutung hat,
$R^4$ gleich oder verschieden sein kann und Alkylrest bedeutet und
d 0, 1, 2 oder 3 ist,
und/oder dessen (Teil)hydrolysat, mit der Maßgabe, daß mindestens ein Silan der Formel (IV) mit d gleich 0 und/oder dessen Teilhydrolysat eingesetzt wird,
und Organosiloxan der durchschnittlichen Formel

$$A[SiR_2O(R_2SiO)_eR_2Si\text{-}A^1\text{-}]_fSiR_2O(R_2SiO)_eR_2SiA \qquad (V),$$

wobei R, A und $A^1$ die obengenannte Bedeutung haben, e gleich oder verschieden sein kann und 0 oder eine ganze Zahl von 1 bis 100 bedeutet und f eine Zahl größer 0 und kleiner oder gleich 10 ist,
sowie gegebenenfalls Organosiloxan der Formel

$$(R_2SiO)_g \qquad (VI),$$

wobei R eine der obengenannten Bedeutungen hat und g eine ganze Zahl im Wert von 3 bis 8, vorzugsweise 4 oder 5, ist, mit Wasser in Gegenwart von Säure sowie gegebenenfalls weiteren Stoffen umgesetzt werden und
in einer 2. Stufe
die in der 1. Stufe erhaltene Reaktionsmasse in Anwesenheit von Base sowie gegebenenfalls weiteren Stoffen umgesetzt wird.

Bei der Beschreibung des erfindungsgemäßen Verfahrens soll sich der Begriff "homogene Reaktionsmasse" auf die flüssige Phase beziehen und bei der Neutralisation entstandenes Salz unberücksichtigt lassen.

Beispiele für die im erfindungsgemäßen Verfahren eingesetzten Silane der Formel (IV) sind Tetramethoxysilan, Tetraethoxysilan, Tetra-n-propoxysilan, Methyltrimethoxysilan, 3-Mercaptopropyltrimethoxysilan, 3-Chlorpropyltrimethoxysilan, Phenyltrimethoxysilan, o,m,p-Tolyltrimethoxysilan, Propyltrimethoxysilan, Methyltriethoxysilan, 3-Mercaptopropyltriethoxysilan, 3-Chlorpropyltriethoxysilan, Phenyltriethoxysilan, o,m,p-Tolyltriethoxysilan, Propyltrimethoxysilan, Dimethyldiethoxysilan, Dimethyldimethoxysilan und Trimethylethoxysilan, wobei Tetraethoxysilan, Methyltrimethoxysilan, Methyltriethoxysilan, Phenyltriethoxysilan, o,m,p-Tolyltriethoxysilan und Propyltriethoxysilan und/oder deren Teilhydrolysate bevorzugt und Tetraethoxysilan und/oder dessen Teilhydrolysat besonders bevorzugt eingesetzt werden.

Falls bei dem erfindungsgemäßen Verfahren Teilhydrolysate von Silanen der allgemeinen Formel (IV) eingesetzt werden, sind solche mit durchschnittlich bis zu 15 Siliciumatomen pro Molekül bevorzugt.

Bei dem erfindungsgemäß eingesetzten Organosiloxan der Formel (V) ist e bevorzugt 0 oder eine ganze Zahl von 1 bis 10, besonders bevorzugt 0, und f durchschnittlich eine Zahl von bevorzugt 0,1 bis 3,0.

Erfindungsgemäß eingesetztes Organosiloxan der Formel (V) kann nach bekannten Verfahren hergestellt werden, wie beispielsweise nach dem in der oben zitierte Anmeldung EP-A-0 523 660 beschriebenen Verfahren durch Umsetzung von Dienen (1) der Formel

$$CH_2 = CR^3\text{-}R^2\text{-}CR^3 = CH_2 \qquad (VII),$$

wobei $R^2$ und $R^3$ die obengenannte Bedeutung haben,
mit $\alpha,\omega$-Dihydrogendiorganosiloxanen (2) in Gegenwart von die Anlagerung von Si-gebundenem Wasserstoff an aliphatische Doppelbindung förderndem Katalysator (3).

Beispiele für Diene (1) der Formel (VII) sind 1,4-Pentadien, 1,5-Hexadien, 1,7-Octadien, 1,9-Decadien, 1,11-Dodecadien, 1,13-Tetradecadien, 1,5,9-Decatrien, 3,5-Dimethyl-1,6-heptadien und 1,4-Divinylbenzol, wobei 1,5-Hexadien und 1,9-Decadien bevorzugt sind.

Beispiele für $\alpha,\omega$-Dihydrogendiorganosiloxane (2) sind 1,1,3,3-Tetramethyldisiloxan, $HSi(CH_3)_2[Si(CH_3)_2O]_8(CH_3)_2SiH$ und $HSi(CH_3)_2[Si(CH_3)_2O]_{50}(CH_3)_2SiH$, wobei 1,1,3,3-Tetramethyldisiloxanbevorzugt ist.

Dien (1) wird dabei in solchen Mengen eingesetzt, daß aliphatische Doppelbindung in organischer Verbindung (1) zu Sigebundenem Wasserstoff in Organosiloxan (2) im Molverhältnis von vorzugsweise 1,5 : 1,0 bis 10 : 1,0, besonders bevorzugt 2,0 : 1,0 bis 4,0 : 1,0, vorliegt.

Als die Anlagerung von Si-gebundenem Wasserstoff an aliphatische Doppelbindung fördernde Katalysatoren (3) können die gleichen Katalysatoren eingesetzt werden, die auch bisher zur Förderung der Anlagerung von Si-gebundenem Wasserstoff an aliphatische Doppelbindung eingesetzt werden konnten. Bei den Katalysatoren (3) handelt es sich vorzugsweise um ein Metall aus der Gruppe der Platinmetalle oder um eine Verbindung oder einen Komplex aus der Gruppe der Platinmetalle. Beispiele für solche Katalysatoren sind metallisches und feinverteiltes Platin, das sich auf Trägern, wie Siliciumdioxid, Aluminiumoxid oder Aktivkohle befinden kann, Verbindungen oder Komplexe von Platin, wie Platinhalogenide, z.B. $PtCl_4$, $H_2PtCl_6 \cdot 6H_2O$, $Na_2PtCl_4 \cdot 4H_2O$, Platin-Olefin-Komplexe, Platin-Alkohol-Komplexe, Platin-Alkoholat-Komplexe, Platin-Ether-Komplexe, Platin-Aldehyd-Komplexe, Platin-Keton-Komplexe, einschließlich Umsetzungsprodukten aus $H_2PtCl_6 \cdot 6H_2O$ und Cyclohexanon, Platin-Vinylsiloxankomplexe, wie Platin-1,3-Divinyl-1,1,3,3-tetramethyldisiloxankomplexe mit oder ohne Gehalt an nachweisbarem anorganisch gebundenem Halogen, Bis-(gamma-picolin)-platindichlorid, Trimethylendipyridinplatindichlorid, Dicyclopentadienplatindichlorid, Dimethylsulfoxydethylenplatin-(II)-dichlorid, Cyclooctadien-Platindichlorid, Norbornadien-Platindichlorid, Gamma-picolin-Platindichlorid, Cyclopentadien-Platindichlorid sowie Umsetzungsprodukte von Platintetrachlorid mit Olefin und primärem Amin oder sekundärem Amin oder primärem und sekundärem Amin, wie das Umsetzungsprodukt aus in 1-Octen gelöstem Platintetrachlorid mit sec.-Butylamin.

Der Katalysator (3) wird vorzugsweise in Mengen von 0,5 bis 1 000 Gew.-ppm (Gewichtsteilen je Million Gewichtsteilen), bevorzugt in Mengen von 2 bis 50 Gew.-ppm, jeweils berechnet als elementares Platin und bezogen auf das Gesamtgewicht von organische Verbindung (1) und Organopolysiloxan (2), eingesetzt.

Die Umsetzung von Dien (1) mit Hydrogensiloxan (2) wird vorzugsweise bei einem Druck zwischen 900 und 1100 hPa (abs.) und bei einer Temperatur von bevorzugt 50 bis 150°C, besonders bevorzugt 60 bis 120°C, durchgeführt.

Bei dem erfindungsgemäßen Verfahren werden als Organosiloxan der Formel (V) vorzugsweise die Umsetzungsprodukte aus 1,5-Hexadien und/oder 1,9-Decadien mit 1,1,3,3-Tetramethyldisiloxan eingesetzt.

Beispiele für die im erfindungsgemäßen Verfahren gegebenenfalls eingesetzten Organosiloxane der Formel (VI) sind Hexamethylcyclotrisiloxan, Octamethylcyclotetrasiloxan und Dekamethylcyclopentasiloxan.

Vorteilhafterweise wird in der 1. Stufe des erfindungsgemäßen Verfahrens ein Gemisch aus Organosiloxan der Formel (V), insbesondere solches mit R gleich Methylrest, $R^2$ gleich Ethandiylrest, $R^3$ gleich Wasserstoffatom, e gleich 0 und f durchschnittlich 0,1 bis 3,0, und Silan der Formel (IV) mit d gleich 0 und/oder dessen Teilhydrolysat im Molverhältnis monofunktioneller zu tetrafunktioneller Einheiten von bevorzugt 0,5:1 bis 1,5:1,0 eingesetzt.

Bei den in der 1. Stufe des erfindungsgemäßen Verfahrens eingesetzten Säuren kann es sich um die gleichen Säuren handeln, die auch bisher zur Hydrolyse von Silanen mit Alkoxygruppen verwendet wurden. Beispiele für die in der 1. Stufe des erfindungsgemäßen Verfahrens eingesetzten Säuren sind HCl, $HClO_4$, Ameisensäure, Essigsäure, Propionsäure, p-Toluolsulfonsäure, Methansulfonsäure, Trifluormethansulfonsäure, Dodecylbenzolsulfonsäure sowie mehrprotonige Säuren, wie $H_2SO_4$, $H_2SeO_4$, $H_3PO_4$, $H_3PO_3$, Oxalsäu-

re, Maleinsäure und Malonsäure. Bevorzugt wird in der 1. Stufe des erfindungsgemäßen Verfahrens mehrprotonige Säure, besonders bevorzugt $H_2SO_4$ und $H_3PO_4$, insbesondere $H_2SO_4$ eingesetzt.

Bei dem erfindungsgemäßen Verfahren wird in der 1. Stufe Silan der Formel (IV) und/oder dessen Teilhydrolysat im Gemisch mit Organosiloxan der Formel (V) und gegebenenfalls Organosiloxan der Formel (VI) mit Wasser und Säure, insbesondere mehrprotoniger Säure, sowie gegebenenfalls weiteren Stoffen zur Reaktion gebracht. Vorzugsweise wird anschließend die Säure in der homogenen Reaktionsmasse durch Basenzugabe zum Teil neutralisiert. Dabei wird Base vorzugsweise in einer solchen Menge zugegeben, daß im Falle einer zweiprotonigen Säure mehr als 50 Gewichtsprozent aber weniger als 100 Gewichtsprozent, im Falle einer dreiprotonigen Säure mindestens 34 Gewichtsprozent aber weniger als 66 Gewichtsprozent an eingesetzter Säure neutralisiert werden. Vorteilhafterweise wird dann die bei der Hydrolyse entstandene Verbindung $R^4OH$ mit $R^4$ gleich der obengenannten Bedeutung destillativ ganz oder teilweise entfernt.

Bei der 1. Stufe des erfindungsgemäßen Verfahrens wird Wasser in Mengen von vorzugsweise 10 bis 30 Gewichtsprozent, besonders bevorzugt 10 bis 20 Gewichtsprozent, jeweils bezogen auf das Gesamtgewicht der Reaktionsmasse der 1. Stufe vor der Destillation, eingesetzt.

In der 1. Stufe des erfindungsgemäßen Verfahrens wird mehrprotonige Säure in Mengen von vorzugsweise 10 ppm (parts per million) bis 10 000 ppm, besonders bevorzugt von 100 ppm bis 5 000 ppm, jeweils bezogen auf das Gesamtgewicht der Reaktionsmasse der 1. Stufe vor der Destillation, eingesetzt.

Vorzugsweise liegt der pH-Wert der Reaktionsmasse in der 1. Stufe des erfindungsgemäßen Verfahrens vor der eventuellen Basenzugabe im Bereich von 0 bis 3, besonders bevorzugt im Bereich von 1 bis 2.

Zusätzlich können in der 1. Stufe des erfindungsgemäßen Verfahrens bis zu vorzugsweise 0,01 Gewichtsprozent, bezogen auf das Gesamtgewicht der Reaktionsmasse der 1. Stufe vor der Destillation, weitere Stoffe eingesetzt werden, wie zum Beispiel Polymerisationsinhibitoren, die die Homopolymerisation von olefinischen Einsatzstoffen, wie beispielsweise Organosiloxan der Formel (V), verhindern sollen.

Beispiele für gegebenenfalls eingesetzte Polymerisationsinhibitoren sind Hydrochinon, 4-Methoxyphenol, Brenzkatechin und BTH (2,6-Di-t-butyl-4-methylphenol).

Vorzugsweise wird in der 1. Stufe des erfindungsgemäßen Verfahrens vor der destillativen Entfernung der entstandenen Verbindung $R^4OH$ mit $R^4$ gleich der obengenannten Bedeutung so viel Base zugegeben, daß der pH-Wert im Bereich von 3,0 bis 6,5, besonders bevorzugt im Bereich von 4,0 bis 6,0, liegt.

Beispiele für Basen sind Alkalihydroxide, wie Natriumhydroxid und Kaliumhydroxid, Alkalisiliconate, wie Natriumsiliconat und Kaliumsiliconat, Amine, wie beispielsweise Methylamin, Dimethylamin, Ethylamin, Diethylamin, Triethylamin und n-Butylamin, und Ammoniumverbindungen, wie etwa Tetramethylammoniumhydroxid, Tetra-n-butylammoniumhydroxid und Benzyltrimethylammoniumhydroxid, wobei Natriumhydroxid, Kaliumhydroxid, Methylamin, Ethylamin, Diethylamin und Benzyltrimethylammoniumhydroxid bevorzugt und Natriumhydroxid, Kaliumhydroxid und Methylamin besonders bevorzugt sind.

Falls erwünscht, kann die Base im Gemisch mit Wasser und/oder einem polaren, wasserlöslichen organischen Lösungsmittel zugegeben werden. Die Verdünnung der Base darf jedoch nicht so hoch sein, daß die Basenzugabe zu einer Ausfällung des entstandenen Organopolysiloxanharzes führt.

Vorzugsweise wird in der 1. Stufe des erfindungsgemäßen Verfahrens nach der eventuellen Basenzugabe Verbindung $R^4OH$ mit $R^4$ gleich der obengenannten Bedeutung in dem Maße abdestilliert, daß die Reaktionsmasse homogen bleibt. Vorzugsweise wird bis zu 90 Gewichtsprozent Verbindung $R^4OH$, bezogen auf das Gesamtgewicht an entstandener Verbindung $R^4OH$ mit $R^4$ gleich der obengenannten Bedeutung, destillativ entfernt.

Die Umsetzung der 1. Stufe des erfindungsgemäßen Verfahrens wird vorzugsweise bei einer Temperatur von 20°C bis zur Siedetemperatur der Reaktionsmasse, besonders bevorzugt bei 60°C bis zur Siedetemperatur der Reaktionsmasse, und dem Druck der umgebenden Atmosphäre, d.h. einem Druck zwischen 900 und 1100 hPa, durchgeführt. Die Destillation der Verbindung $R^4OH$ mit $R^4$ gleich der obengenannten Bedeutung erfolgt vorzugsweise bei der Siedetemperatur der Reaktionsmasse und dem Druck der umgebenden Atmosphäre.

Nach Beendigung der 1. Stufe des erfindungsgemäßen Verfahrens wird die homogene Reaktionsmasse mit einer solchen Mengen an Base, die zur Erreichung einer basisch reagierenden Reaktionsmasse erforderlich ist, sowie gegebenenfalls weiteren Stoffen versetzt und reagieren gelassen.

Vorzugsweise wird in der 2. Stufe des erfindungsgemäßen Verfahrens soviel Base zugegeben, daß der pH-Wert im Bereich von 8,0 bis 14,0, bevorzugt von 9,0 bis 13,0, liegt. Es handelt sich dabei je nach eingesetzter Base im allgemeinen um Basenmengen im Bereich von 0,05 bis 1,0 Gewichtsprozent, bezogen auf das Gesamtgewicht der Reaktionsmasse der 2. Stufe vor der Destillation.

Als Basen können in der 2. Stufe des erfindungsgemäßen Verfahrens alle Basen eingesetzt werden, die auch in der 1. Stufe eingesetzt werden können, wobei vorzugsweise die gleiche Base wie in der 1. Stufe eingesetzt wird.

Falls erwünscht, kann die Base im Gemisch mit Wasser und/oder einem polaren, wasserlöslichen organischen Lösungsmittel zugegeben werden. Die Verdünnung der Base darf jedoch nicht so hoch sein, daß die Basenzugabe zu einer Ausfällung des entstandenen Organopolysiloxanharzes führt.

Bevorzugt wird in der 2. Stufe des erfindungsgemäßen Verfahrens wasserunlösliches organisches Lösungsmittel eingesetzt.

Unter dem Begriff wasserunlösliche organische Lösungsmittel sollen im folgenden organische Lösungsmittel verstanden werden, deren Löslichkeit bei Raumtemperatur und dem Druck der umgebenden Atmosphäre maximal 1 g Lösungsmittel pro Liter Wasser beträgt.

Beispiele für wasserunlösliche organische Lösungsmittel sind Kohlenwasserstoffe, die mit Wasser ein niedrig siedendes Azeotrop bilden, wie Cyclohexan, Methylcyclohexan, Benzol, Toluol, o,m,p-Xylol und Mesitylen, wobei Cyclohexan und Methylcyclohexan bevorzugt sind.

Falls in der 2. Stufe des erfindungsgemäßen Verfahrens wasserunlösliches organisches Lösungsmittel eingesetzt wird, wird dieses mindestens in einer solchen Menge verwendet, die zur Erhaltung einer homogenen Reaktionsmasse ausreicht. Bevorzugt werden dabei so viel Volumenteile an wasserunlöslichem organischen Lösungsmittel zugegeben, wie Alkohol und gegebenenfalls Wasser in der 1. Stufe abdestilliert wurden.

Beispiele für die in der 2. Stufe gegebenenfalls eingesetzten weiteren Stoffe sind Silane der Formel (IV), in denen die Reste R ganz oder zum Teil die Bedeutung von säureempfindlichen organischen Resten haben, wie beispielsweise 3-Aminopropyl-, N-(2-Aminoethyl)-3-aminopropyl- sowie Aminophenylreste.

Die 2. Stufe des erfindungsgemäßen Verfahrens wird vorzugsweise bei einer Temperatur zwischen 50°C und der Siedetemperatur der Reaktionsmasse, besonders bevorzugt zwischen 60°C und der Siedetemperatur der Reaktionsmasse, und einem Druck der umgebenden Atmosphäre durchgeführt.

Bei der in der 2. Stufe des erfindungsgemäßen Verfahrens durchgeführten azeotropen Destillation werden das in der Reaktionsmischung enthaltene Wasser sowie die restliche Verbindung $R^4OH$ mit $R^4$ gleich der obengenannten Bedeutung vollständig bzw. nahezu vollständig entfernt.

Mit der in der 2. Stufe des erfindungsgemäßen Verfahrens durchgeführten Destillation wird vorteilhafterweise sofort nach der Basenzugabe begonnen. Die Destillation ist zur Erzielung eines Alkenylgruppen aufweisenden Siloxancopolymeren mit hohem durchschnittlichen Molekulargewicht, welches Hydroxyl- bzw. $R^4O$-Gruppen nur in einem geringen Maße aufweist, notwendig.

Vorzugsweise wird nach Beendigung der 2. Stufe des erfindungsgemäßen Verfahrens die homogene Reaktionsmasse durch Zusatz einer mehrprotonigen Säure und/oder deren Salze durch Pufferung auf einen pH-Wert zwischen 6 und 8, bevorzugt 7, eingestellt, Wasser und gegebenenfalls noch vorhandene Verbindung $R^4OH$ mit $R^4$ gleich der obengenannten Bedeutung abdestilliert und das ausgefallene Salz abfiltriert, wobei - falls erwünscht - bereits vor der Filtration ein Teil des gegebenenfalls vorhandenen wasserunlöslichen organischen Lösungsmittels abdestilliert werden kann. In diesem Fall wird vorzugsweise vor der Filtration das wasserunlösliche organische Lösungsmittel in einer solchen Menge abdestilliert, daß ein Konzentrat mit einem Gehalt an Siloxancopolymeren von 50 bis 80 Gewichtsprozent resultiert.

Bei dieser gegebenenfalls durchgeführten 3. Stufe des erfindungsgemäßen Verfahrens werden als mehrprotonige Säure bzw. deren Salze vorzugsweise Phosphorsäure, Alkalidihydrogenphosphate, Gemische aus Phosphorsäure und Alkaliorthophosphaten, Gemische aus Alkalidihydrogenphosphaten und Dialkalihydrogenphosphaten sowie Gemische aus Alkalidihydrogenphosphaten und Alkaliorthophosphaten eingesetzt, wobei Phosphorsäure, Natriumdihydrogenphosphat und ein Gemisch aus Phosphorsäure und Natriumorthophosphat besonders bevorzugt sind.

Falls erwünscht, können in der gegebenenfalls durchgeführten 3. Stufe des erfindungsgemäßen Verfahrens die mehrbasige Säure und/oder deren Salze in Form von wäßrigen Lösungen eingesetzt werden.

Die gegebenenfalls durchgeführte 3. Stufe des erfindungsgemäßen Verfahrens wird vorzugsweise bei einer Temperatur zwischen 50°C und der Siedetemperatur der Reaktionsmasse, besonders bevorzugt zwischen 60°C und der Siedetemperatur der Reaktionsmasse, und einem Druck der umgebenden Atmosphäre durchgeführt.

Nach Beendigung der gegebenenfalls durchgeführten 3. Stufe kann die erhaltene Reaktionsmasse, sofern sie wasserunlösliches organisches Lösungsmittel enthält, in einer 4. Stufe vom wasserunlöslichen organischen Lösungsmittel befreit werden.

Eine bevorzugte Ausführungsform des erfindungsgemäßen Verfahrens zur Herstellung von Organopolysiloxanharz besteht darin, daß
in einer 1. Stufe
mindestens ein Silan der Formel

$R_dSi(OR^4)_{4-d}$    (IV),

wobei

R    die obengenannte Bedeutung hat,

$R^4$    gleich oder verschieden sein kann und Alkylrest bedeutet und

d    0, 1, 2 oder 3 ist,

und/oder dessen (Teil)hydrolysat, mit der Maßgabe, daß mindestens ein Silan der Formel (IV) mit d gleich 0 und/oder dessen Teilhydrolysat eingesetzt wird,

und Organosiloxan der durchschnittlichen Formel

$A[SiR_2O(R_2SiO)_eR_2Si\text{-}A^1\text{-}]_fSiR_2O(R_2SiO)_eR_2SiA$    (V),

wobei R, A und $A^1$ die obengenannte Bedeutung haben, e 0 oder eine ganze Zahl von 1 bis 100 ist und f eine Zahl größer 0 und kleiner oder gleich 10 bedeutet,

sowie gegebenenfalls Organosiloxan der Formel

$(R_2SiO)_g$    (VI),

wobei R eine der obengenannten Bedeutung hat und g eine ganze Zahl im Wert von 3 bis 8, vorzugsweise 4 oder 5, ist, mit Wasser in Gegenwart von mehrprotoniger Säure sowie gegebenenfalls weiteren Stoffen umgesetzt werden, anschließend durch Basenzugabe die Säure zum Teil neutralisiert wird und dann die entstandene Verbindung $R^4OH$ zumindest zum Teil abdestilliert wird,

in einer 2. Stufe

die in der 1. Stufe erhaltene homogene Reaktionsmasse in Anwesenheit von Base sowie wasserunlöslichem organischen Lösungsmittel umgesetzt werden und Wasser sowie Verbindung $R^4OH$ abdestilliert werden,

in einer 3. Stufe

die in der 2. Stufe erhaltene homogene Reaktionsmasse mit mehrprotoniger Säure und/oder deren Salze durch Pufferung auf einen pH-Wert zwischen 6 und 8 eingestellt wird, Wasser und gegebenenfalls noch vorhandene Verbindung $R^4OH$ abdestilliert wird und das ausgefallene Salz abfiltriert wird sowie

gegebenenfalls in einer 4. Stufe

die in der 3. Stufe erhaltene homogene Reaktionsmasse von wasserunlöslichem organischen Lösungsmittel befreit wird.

Nach einer besonders bevorzugten Ausführungsform des erfindungsgemäßen Verfahrens wird Silan der Formel (IV) mit d gleich 0, insbesondere Tetraethoxysilan, und/oder dessen Teilhydrolysat und Organosiloxan der Formel (V)

in einer 1. Stufe mit Wasser und mehrbasiger Säure, insbesondere Schwefelsäure, vermischt, erst bei 60 °C, dann bei der Siedetemperatur der Reaktionsmasse, im Fall von Tetraethoxysilan und/oder dessen Teilhydrolysat 78 °C, und einem Druck zwischen 900 und 1100 hPa umgesetzt, die erhaltene Reaktionsmasse mit Base zum Teil neutralisiert, und die Verbindung $R^4OH$ weitgehend destillativ entfernt,

in einer 2. Stufe die in der 1. Stufe erhaltene Reaktionsmasse in Anwesenheit von Base und einem wasserunlöslichen organischen Lösungsmittel, insbesondere Cyclohexan oder Methylcyclohexan, umgesetzt, gleichzeitig Wasser und Verbindung $R^4OH$ bei dem Druck der umgebenden Atmosphäre azeotrop abdestilliert bis die Siedetemperatur des organischen Lösungsmittels erreicht ist, in einer 3. Stufe die in der 2. Stufe erhaltene basische Reaktionsmasse bei 60 °C und einem Druck der umgebenden Atmosphäre mit Phosphatpuffer auf einen pH-Wert zwischen 6 und 8 eingestellt, Wasser und gegebenenfalls noch vorhandene Verbindung $R^4OH$ azeotrop abdestilliert und das ausgefallene Salz abfiltriert, wobei $R^4$ die obengenannte Bedeutung hat, sowie in einer 4. Stufe gegebenenfalls das wasserunlösliche organische Lösungsmittel entfernt.

Bei dem erfindungsgemäßen Verfahren kann es sich bei den einzelnen Komponenten jeweils um eine Art dieser Komponente wie auch um ein Gemisch aus mindestens zwei Arten dieser Komponente handeln.

Das erfindungsgemäße Verfahren hat den Vorteil, daß es sehr einfach in der Durchführung und sehr gut reproduzierbar ist. Die nach dem erfindungsgemäßen Verfahren hergestellten Alkenylgruppen aufweisenden Siloxancopolymere haben den Vorteil, daß sie einen sehr niedrigen Anteil an Hydroxyl- und/oder Alkoxygruppen besitzen.

Die erfindungsgemäßen, Alkenylgruppen aufweisenden Siloxancopolymere können wie die Si-gebundene Vinylgruppen aufweisenden Organopolysiloxane mit Si-gebundenen Wasserstoff aufweisenden Organopolysiloxanen in Gegenwart von Hydrosilylierungskatalysatoren vernetzt werden.

Weiterhin können die erfindungsgemäßen, Alkenylgruppen aufweisenden Siloxancopolymere auch mit Mercaptogruppen aufweisenden organischen Polymeren vernetzt werden. Dies kann thermisch, durch basische Katalyse, bevorzugt aber durch Bestrahlung nach Zusatz wirksamer Radikalinitiatoren erfolgen. Besonders bevorzugt wird jedoch die Elektronenbestrahlung durchgeführt, wobei ein Zusatz von Radikalinitiatoren unnötig ist.

Ein weiterer Gegenstand der Erfindung sind vernetzbare Zusammensetzungen, die

(A) erfindungsgemäßes, Alkenylgruppen aufweisendes Siloxancopolymer,

(B) Si-gebundenen Wasserstoff aufweisendes Organopolysiloxan und

(C) die Anlagerung von Si-gebundenem Wasserstoff an aliphatische Doppelbindung fördernden Katalysator

enthalten.

Die die erfindungsgemäßen Siloxancopolymere enthaltenden vernetzbaren Zusammensetzungen werden vorzugsweise zur Herstellung von klebrige Stoffe abweisenden Überzügen, z. B. zur Herstellung von Trennpapieren oder Trennfolien, verwendet.

Die Herstellung der mit dem Trennpapier verbundenen Selbstklebematerialien erfolgt nach dem off-line Verfahren oder dem in-line Verfahren. Beim off-line Verfahren wird die Siliconzusammensetzung auf das Papier aufgetragen und vernetzt, dann, in einer darauffolgenden Stufe, gewöhnlich nach dem Aufwickeln des Trennpapiers auf eine Rolle und nach dem Lagern der Rolle, wird ein Klebstoffilm, der beispielsweise auf einem Etikettenfacepapier aufliegt, auf das beschichtete Papier aufgetragen und der Verbund wird dann zusammengepreßt. Beim in-line Verfahren wird die Siliconzusammensetzung auf das Papier aufgetragen und vernetzt, der Siliconüberzug wird mit dem Klebstoff beschichtet, das Etikettenfacepapier wird dann auf den Klebstoff aufgetragen und der Verbund schließlich zusammengepreßt. Beim in-line Verfahren wurde gefunden, daß der Klebstoff, insbesondere wenn es sich um einen Acrylklebstoff handelt, sich mit dem Siliconüberzug auf dem Trennpapier verbindet, wenn der Klebstoff auf das mit der Siliconzusammensetzung beschichtete Trennpapier kurze Zeit nach der Vernetzung der Siliconzusammensetzung aufgetragen wird. Diese Bindung zwischen dem Siliconüberzug und dem Klebstoff wird beobachtet, wenn bei der Herstellung der Überzüge Vinylgruppen aufweisende Organopolysiloxane mit Sigebundene Wasserstoffatome aufweisenden Organopolysiloxanen im Überschuß vernetzt werden.

Die Verwendung der erfindungsgemäßen Zusammensetzungen zur Herstellung von Trennpapieren erlaubt aufgrund der sehr hohen Vernetzungsgeschwindigkeiten auch bei niedriger Temperatur den Einsatz eines geringen Prozentsatzes des Bestandteils (B) zur vollständigen Aushärtung von Klebstoffe abweisenden Überzügen. Der obengenannte Effekt tritt daher nicht oder nur vermindert auf.

Bei den erfindungsgemäßen Zusammensetzungen kann eine oder mehrere Arten des erfindungsgemäßen, Alkenylgruppen aufweisenden Siloxancopolymeren (A) allein oder in Kombination mit Alkenylgruppen aufweisenden Siloxanpolymeren eingesetzt werden.

Als Bestandteil (B) können auch bei den erfindungsgemäßen Zusammensetzungen die gleichen Si-gebundenen Wasserstoff aufweisenden Organopolysiloxane verwendet werden, die bei allen bisher bekannten Zusammensetzungen aus Vinylgruppen aufweisendem Organopolysiloxan, Si-gebundenen Wasserstoff aufweisendem Organopolysiloxan und Katalysator eingesetzt werden konnten.

Als Bestandteil (B) werden bevorzugt Organopolysiloxane aus Einheiten der Formel

$$H_h R^5_i SiO_{\frac{4-(h+i)}{2}} \qquad (VII),$$

wobei

R$^5$   gleich oder verschieden sein kann und eine für R angegebene Bedeutung hat,

h   0 oder 1, durchnittlich 0,005 bis 1,0,

i   0, 1, 2 oder 3, durchschnittlich 1,0 bis 2,0, und

die Summe h + i nicht größer als 3 ist,

verwendet.

Beispiele für Organopolysiloxane (B) sind insbesondere Mischpolymerisate aus Dimethylhydrogensiloxan-, Methylhydrogensiloxan-, Dimethylsiloxan- und Trimethylsiloxaneinheiten, Mischpolymerisate aus Trimethylsiloxan-, Dimethylhydrogensiloxan- und Methylhydrogensiloxaneinheiten, Mischpolymerisate aus Trimethylsiloxan-, Dimethylsiloxan- und Methylhydrogensiloxaneinheiten, Mischpolymerisate aus Methylhydrogensiloxan- und Trimethylsiloxaneinheiten, Mischpolymerisate aus Methylhydrogensiloxan-, Diphenylsiloxan-

EP 0 607 869 B1

und Trimethylsiloxaneinheiten, Mischpolymerisate aus Methylhydrogensiloxan-, Dimethylhydrogensiloxan- und Diphenylsiloxaneinheiten, Mischpolymerisate aus Methylhydrogensiloxan-, Phenylmethylsiloxan-, Trimethylsiloxan- und/oder Dimethylhydrogensiloxaneinheiten, Mischpolymerisate aus Methylhydrogensiloxan-, Dimethylsiloxan-, Diphenylsiloxan-, Trimethylsiloxan- und/oder Dimethylhydrogensiloxaneinheiten sowie Mischpolymerisate aus Dimethylhydrogensiloxan-, Trimethylsiloxan-, Phenylhydrogensiloxan-, Dimethylsiloxan- und/oder Phenylmethylsiloxaneinheiten.

Vorzugsweise enthalten die Organopolysiloxane (B) mindestens drei Si-gebundene Wasserstoffatome.

Organopolysiloxan (B) wird vorzugsweise in Mengen von 0,5 bis 3, insbesondere 1 bis 2 Grammatom Si-gebundenen Wasserstoffs je Mol Alkenylgruppe in den Alkenylgruppen aufweisenden Siloxancopolymeren (A) eingesetzt.

Als die Anlagerung von Si-gebundenem Wasserstoff an aliphatische Doppelbindung fördernden Katalysator (C) können auch bei den erfindungsgemäßen Zusammensetzungen die gleichen Katalysatoren verwendet werden, die auch bei den bisher bekannten Zusammensetzungen zum Vernetzen von aliphatische Doppelbindungen enthaltenden Organopolysiloxanen mit Verbindungen, die Si-gebundenen Wasserstoff enthalten, eingesetzt werden konnten. Als Bestandteil (C) werden vorzugsweise die oben genannten Katalysatoren (3) verwendet.

Katalysator (C) wird vorzugsweise in Mengen von 5 bis 500 Gewichts-ppm (Gewichtsteilen je Million Gewichtsteilen), insbesondere 10 bis 200 Gewichts-ppm, jeweils berechnet als elementares Platinmetall und bezogen auf das Gesamtgewicht des Siloxancopolymers (A) und Organopolysiloxans (B), eingesetzt.

Beispiele für weitere Bestandteile, die bei den erfindungsgemäßen Zusammensetzungen mitverwendet werden können, sind die Anlagerung von Si-gebundenem Wasserstoff an aliphatische Doppelbindung bei Raumtemperatur verzögernde Mittel, sogenannte Inhibitoren (D), Mittel zur Einstellung der Trennkraft, Lösungsmittel, Haftvermittler und Pigmente.

Als Inhibitoren (D) können auch bei den erfindungsgemäßen Zusammensetzungen alle Inhibitoren verwendet werden, die auch bisher für den gleichen Zweck verwendet werden konnten. Beispiele für Inhibitoren sind 1,3-Divinyl-1,1,3,3-tetramethyldisiloxan, Benzotriazol, Dialkylformamide, Dialkylmaleinate, Alkylthioharnstoffe, Methylethylketoxim, organische oder siliciumorganische Verbindungen mit einem Siedepunkt von mindestens 25 °C bei 1012 mbar (abs.) und mindestens einer aliphatischen Dreifachbindung, wie 1-Ethinylcyclohexan-1-ol, 2-Methyl-3-butin-2-ol, 3-Methyl-1-pentin-3-ol, 2,5-Dimethyl-3-hexin-2,5-diol und 3,5-Dimethyl-1-hexin-3-ol, eine Mischung aus Diallylmaleinat und Vinylacetat und Maleinsäuremonoester.

Vorzugsweise wird der Inhibitor (D) in Mengen von 0,05 bis 2 Gew.-%, bezogen auf das Gesamtgewicht der Siloxancopolymere (A) und Organopolysiloxane (B), eingesetzt.

Beispiele für Mittel zur Einstellung der Trennkraft der mit den erfindungsgemäßen Zusammensetzungen hergestellten, klebrige Stoffe abweisenden Überzügen sind Siliconharze aus Einheiten der Formel

$$R^6(CH_3)_2SiO_{1/2} \text{ und } SiO_2 \text{ ,}$$

sogenannte MQ-Harze, wobei $R^6$ gleich oder verschieden sein kann und ein Wasserstoffatom, ein Methylrest, ein Vinylrest oder ein Rest A mit A gleich der obengenannten Bedeutung ist. Das Molverhältnis von Einheiten der Formel $R^6(CH_3)_2SiO_{1/2}$ zu Einheiten der Formel $SiO_2$ beträgt vorzugsweise 0,6 bis 2. Die Siliconharze werden vorzugsweise in Mengen von 5 bis 80 Gew.-%, bezogen auf das Gesamtgewicht der Siloxancopolymere (A) und Organopolysiloxane (B), eingesetzt.

Die bei den erfindungsgemäßen Zusammensetzungen gegebenenfalls mitverwendeten Lösungsmittel können die gleichen Lösungsmittel sein, die bei den bisher bekannten Zusammensetzungen aus Si-gebundene Vinylgruppen aufweisenden Organopolysiloxanen, Si-gebundenen Wasserstoff aufweisenden Organopolysiloxanen und die Anlagerung von Si-gebundenem Wasserstoff an aliphatische Doppelbindung förderndem Katalysator verwendet werden konnten. Beispiele für solche Lösungsmittel sind Benzine, z. B. Alkangemische mit einem Siedebereich von 80 °C bis 110 °C bei 1012 mbar (abs.), n-Heptan, Benzol, Toluol und Xylole, halogenierte Alkane mit 1 bis 6 Kohlenstoffatomen, wie Methylenchlorid, Trichlorethylen und Perchlorethylen, Ether, wie Di-n-butylether, Ester, wie Ethylacetat, und Ketone, wie Methylethylketon und Cyclohexanon.

Werden organische Lösungsmittel mitverwendet, so werden sie zweckmäßig in Mengen von 10 bis 95 Gew.-%, bezogen auf das Gewicht der Alkenylgruppen aufweisenden Siloxancopolymere (A), eingesetzt.

Die Reihenfolge beim Vermischen der Bestandteile (A), (B), (C) und gegebenenfalls (D) ist zwar nicht entscheidend, für die Praxis hat es sich jedoch bewährt, den Bestandteil (C) dem Gemisch der anderen Bestandteile zuletzt zuzusetzen.

Die Vernetzung der erfindungsgemäßen Zusammensetzungen erfolgt vorzugsweise bei 50 °C bis 150 °C. Ein Vorteil bei den erfindungsgemäßen Zusammensetzungen ist, daß eine rasche Vernetzung schon

10

bei niedrigen Temperaturen erzielt wird. Für die Vernetzung durch Erwärmen werden vorzugsweise Umlufttrockenschränke, Heizkanäle, beheizte Walzen, beheizte Platten oder Wärmestrahlen des Infrarotbereiches verwendet.

Die erfindungsgemäßen Zusammensetzungen können außer durch Erwärmen auch durch Bestrahlen mit Ultraviolettlicht oder durch Bestrahlen mit UV- und IR-Licht vernetzt werden. Als Ultraviolettlicht wird üblicherweise solches mit einer Wellenlänge von 253,7 nm verwendet. Im Handel gibt es eine Vielzahl von Lampen, die Ultraviolettlicht mit einer Wellenlänge von 200 bis 400 nm aussenden, und die Ultraviolettlicht mit einer Wellenlänge von 253,7 nm bevorzugt emittieren.

Das Auftragen der erfindungsgemäßen Zusammensetzungen auf die klebrige Stoffe abweisend zu machenden Oberflächen kann in beliebiger, für die Herstellung von Überzügen aus flüssigen Stoffen geeigneter und vielfach bekannter Weise erfolgen, beispielsweise durch Tauchen, Streichen, Gießen, Sprühen, Aufwalzen, Drucken, z. B. mittels einer Offsetgravur-Überzugsvorrichtung, Messer- oder Rakel-Beschichtung oder mittels einer Luftbürste.

Bei den klebrige Stoffe abweisend zu machenden Oberflächen, die im Rahmen der Erfindung behandelt werden können, kann es sich um Oberflächen beliebiger bei Raumtemperatur und Atmosphärendruck fester Stoffe handeln. Beispiele für derartige Oberflächen sind diejenigen von Papier, Holz, Kork und Kunststoffolien, z. B. Polyethylenfolien oder Polypropylenfolien, gewebtem und ungewebtem Tuch aus natürlichen oder synthetischen Fasern oder Glasfasern, keramischen Gegenständen, Glas, Metallen, mit Polyethylen beschichtetem Papier und von Pappen, einschließlich solcher aus Asbest. Bei dem vorstehend erwähnten Polyethylen kann es sich jeweils um Hoch-, Mittel- oder Niederdruck-Polyethylen handeln. Bei Papier kann es sich um minderwertige Papiersorten, wie saugfähige Papiere, einschließlich rohem, d. h. nicht mit Chemikalien und/oder polymeren Naturstoffen vorbehandeltes Kraftpapier mit einem Gewicht von 60 bis 150 g/m$^2$, ungeleimte Papiere, Papiere mit niedrigem Mahlgrad, holzhaltige Papiere, nicht satinierte oder nicht kalandrierte Papiere, Papiere, die durch die Verwendung eines Trockenglättzylinders bei ihrer Herstellung ohne weitere aufwendigen Maßnahmen auf einer Seite glatt sind und deshalb als "einseitig maschinenglatte Papiere" bezeichnet werden, unbeschichtete Papiere oder aus Papierabfällen hergestellte Papiere, also um sogenannte Abfallpapiere, handeln. Bei dem erfindungsgemäß zu behandelnden Papier kann es sich aber auch selbstverständlich um hochwertige Papiersorten, wie saugarme Papiere, geleimte Papiere, Papiere mit hohem Mahlgrad, holzfreie Papiere, kalandrierte oder satinierte Papiere, Pergaminpapiere, pergamentisierte Papiere oder vorbeschichtete Papiere, handeln. Auch die Pappen können hoch- oder minderwertig sein.

Die erfindungsgemäßen Zusammensetzungen eignen sich beispielsweise zum Herstellen von Trenn-, Abdeck-, und Mitläuferpapieren, einschließlich Mitläuferpapieren, die bei der Herstellung von z. B. Gieß- oder Dekorfolien oder von Schaumstoffen, einschließlich solcher aus Polyurethan, eingesetzt werden. Die erfindungsgemäßen Zusammensetzungen eignen sich weiterhin beispielsweise zur Herstellung von Trenn-, Abdeck-, und Mitläuferpappen, -folien, und -tüchern, für die Ausrüstung der Rückseiten von selbstklebenden Bändern oder selbstklebenden Folien oder der beschrifteten Seiten von selbstklebenden Etiketten. Die erfindungsgemäßen Zusammensetzungen eignen sich auch für die Ausrüstung von Verpackungsmaterial, wie solchem aus Papier, Pappschachteln, Metallfolien und Fässern, z. B. Pappe, Kunstoff, Holz oder Eisen, das bzw. die für Lagerung und/oder Transport von klebrigen Gütern, wie Klebstoffen, klebrigen Lebensmitteln, z. B. Kuchen, Honig, Bonbons und Fleisch, Bitumen, Asphalt, gefetteten Materialien und Rohgummi, bestimmt ist bzw. sind.

Ein weiteres Beispiel für die Anwendung der erfindungsgemäßen Zusammensetzungen ist die Ausrüstung von Trägern zum Übertragen von Haftklebeschichten beim sogenannten "Transfer-Verfahren".

Die erfindungsgemäßen Zusammensetzungen eignen sich zur Herstellung der mit dem Trennpapier verbundenen Selbstklebematerialien sowohl nach dem off-line Verfahren als auch nach dem in-line Verfahren.

Die erfindungsgemäßen Zusammensetzungen haben den Vorteil, daß die darin enthaltenen erfindungsgemäßen, Alkenylgruppen aufweisenden Siloxancopolymeren auch bei niedriger Temperatur hohe Vernetzungsgeschwindigkeiten ermöglichen.

In den nachfolgenden Beispielen beziehen sich alle Angaben von Teilen und Prozentsätzen, soweit nichts anderes angegeben ist, auf das Gewicht. Sofern nicht anders angegeben, werden die nachstehenden Beispiele bei einem Druck der umgebenden Atmosphäre, also etwa bei 1000 hPa, und bei Raumtemperatur also bei etwa 20 °C bzw. bei einer Temperatur, die sich beim Zusammengeben der Reaktanden bei Raumtemperatur ohne zusätzliche Heizung oder Kühlung einstellt, durchgeführt. Alle in den Beispielen angeführten Viskositätsangaben sollen sich auf eine Temperatur von 25 °C beziehen.

**Beispiel 1**

Eine Mischung aus 185 g (1,14 Mol) Hexamethyldisiloxan, 57 g (0,14 Mol) $H_2C=CH-(CH_2)_4-Si(CH_3)_2-O[-Si(CH_3)_2-(CH_2)_6-Si(CH_3)_2-O]_{0,5}-Si(CH_3)_2-(CH_2)_4-CH=CH_2$, 450 g Tetraethoxysilan mit einem 40-%igem $SiO_2$-Anteil (käuflich erhältlich unter der Bezeichnung "TES 40" bei der Wacker-Chemie GmbH, München; entspricht 3,00 Mol $SiO_2$-Einheiten), 125 g Wasser und 16 g 10-%iger $H_2SO_4$ in Wasser wird für eine Dauer von 1 Stunde bei einer Temperatur von 60°C und anschließend 4 Stunden lang bei einer Temperatur von 78°C unter Rückfluß erhitzt. Insgesamt werden 2,70 Mol an monofunktionellen Einheiten (2,28 Mol Trimethylsiloxy-, 0,28 Mol 5-Hexenyl-dimethylsiloxy- und 0,14 Mol verbrückende - $(CH_2)_3-Si(CH_3)_2O_{1/2}$-Einheiten) eingesetzt, das M:Q-Verhältnis beträgt somit 0,90.

Das Reaktionsgemisch wird mit 10 g 10%iger NaOH in Wasser versetzt und danach werden im Verlauf von 1 Stunde 340 g Destillat abgenommen. Die Reaktionsmasse wird anschließend mit 400 ml Cyclohexan und 6 g 10-%iger NaOH in Wasser versetzt und danach werden 80 g Wasser/Ethanolgemisch während einer Dauer von 1 - 2 Stunden bis zum Erreichen einer Kopftemperatur von 80°C azeotrop abdestilliert. Im Anschluß daran wird das mit Ausnahme von ausgefallenem Natriumsulfat homogene Reaktionsgemisch mit 6 g $H_3PO_4$ (85% in Wasser) angesäuert, für eine Dauer von 1 Stunde bei 60°C gerührt, anschließend mit 100 g 15 %iger $Na_3PO_4.12H_2O$-Lösung in Wasser versetzt und weitere 15 Minuten bei 60°C gerührt. Danach werden während einer Dauer von 60-90 Minuten 95 g Wasser/Ethanolgemisch bis zum Erreichen einer Kopftemperatur von 80°C azeotrop abdestilliert und weitere 100 ml Cyclohexan destillativ entfernt.

Nach Abtrennung ausgefallener Natriumsalze der verwendeten Säuren durch Filtration werden 650 g einer 62 %igen, neutralen Harzlösung in Cyclohexan erhalten. Der Gehalt an Restethoxygruppen im Harz beträgt 3,9 Molprozent bezogen auf Gesamtsilicium. Die Ausbeute an Alkenylgruppen aufweisendem, harzartigem Siloxancopolymeren liegt somit bei 95% der Theorie. Die Viskosität einer 50%igen Lösung dieses Siloxancopolymeren in Cyclohexan beträgt 6,0 cSt.

**Beispiel 2**

Die in Beispiel 1 angegebene Arbeitsweise wird wiederholt mit der Abänderung, daß anstelle von der Eduktmischung aus Beispiel 1 von einer Mischung aus 179 g (1,10 Mol) Hexamethyldisiloxan, 64,5 g (0,14 Mol) $H_2C=CH-(CH_2)_4-Si(CH_3)_2-O[-Si(CH_3)_2-(CH_2)_6-Si(CH_3)_2-O]_{0,75}-Si(CH_3)_2-(CH_2)_4-CH=CH_2$, 450 g Tetraethoxysilan mit einem 40%igen $SiO_2$-Anteil (käuflich erhältlich unter der Bezeichnung TES 40 bei der Wacker-Chemie GmbH, München; entspricht 3,00 Mol $SiO_2$-Einheiten),125 g Wasser und 16 g 10 %iger $H_2SO_4$ in Wasser ausgegangen wird. Insgesamt werden wiederum 2,70 Mol an monofunktionellen Einheiten (2,21 Mol Trimethylsiloxy-, 0,28 Mol 5-Hexenyl-dimethylsiloxy- und 0,21 Mol verbrückende $-(CH_2)_3-Si(CH_3)-_2O_{1/2}$-Einheiten) eingesetzt; das M:Q-Verhältnis beträgt somit wiederum 0,90, wobei der molare Anteil an verbrückend wirkenden monofunktionellen Einheiten erhöht und der molare Anteil an monofunktionellen Trimethylsiloxy-Einheiten in gleichem Maße herabgesetzt wird.

Nach Filtration werden 640 g einer 63 %igen, neutralen Harzlösung in Cyclohexan erhalten. Der Gehalt an Restethoxygruppen im Harz beträgt 4,3 Molprozent bezogen auf Gesamtsilicium. Die Ausbeute an Alkenylgruppen aufweisendem, harzartigen Siloxancopolymeren liegt somit bei 94% der Theorie. Die Viskosität einer 50%igen Lösung dieses Siloxancopolymeren in Cyclohexan beträgt 7,8 cSt.

**Vergleichsbeispiel 1**

Die in Beispiel 1 angegebene Arbeitsweise wird wiederholt mit der Abänderung, daß anstelle von der Eduktmischung aus Beispiel 1 von einer Mischung aus 196 g (1,21 Mol) Hexamethyldisiloxan, 41,7 g (0,14 Mol) 1,3-Bis(5-hexenyl)tetramethyldisiloxan, 450 g Tetraethoxysilan mit einem 40%igen $SiO_2$-Anteil (käuflich erhältlich unter der Bezeichnung TES 40 bei der Wacker-Chemie GmbH, München; entspricht 3,00 Mol $SiO_2$-Einheiten), 125 g Wasser und 16 g 10%iger $H_2SO_4$ in Wasser ausgegangen wird. Insgesamt werden wiederum 2,70 Mol an monofunktionellen Einheiten (2,42 Mol Trimethylsiloxy- und 0,28 Mol 5-Hexenyl-dimethylsiloxyeinheiten) eingesetzt; das M:Q-Verhältnis beträgt wiederum 0,90, wobei hier keine verbrückend wirkenden monofunktionellen Einheiten eingesetzt werden. Nach Filtration werden 640 g einer 62%igen, neutralen Harzlösung in Cyclohexan erhalten. Der Gehalt an Restethoxygruppen im Organopolysiloxanharz beträgt 3,3 Molprozent bezogen auf Gesamtsilizium. Die Ausbeute an Organopolysiloxanharz liegt somit bei 94% der Theorie. Die Viskosität einer 50%igen Lösung des Organopolysiloxanharzes in Cyclohexan beträgt 4,0 cSt.

**Beispiel 3**

Eine Mischung aus 242 g (1,49 Mol) Hexamethyldisiloxan, 78 g (0,14 Mol) $H_2C=CH-(CH_2)_4-Si(CH_3)_2-$ $O[-Si(CH_3)_2-(CH_2)_6-Si(CH_3)_2-O]_{1.2}-Si(CH_3)_2-(CH_2)_4-CH=CH_2$, 450 g Tetraethoxysilan mit einem 40 %igen $SiO_2$-Anteil (käuflich erhältlich unter der Bezeichnung TES 40 bei der Wacker-Chemie GmbH, München; entspricht 3,00 Mol $SiO_2$-Einheiten), 110 g Wasser und 33 g 10%iger $H_2SO_4$ in Wasser wird für eine Dauer von 1 Stunde bei einer Temperatur von 60°C und anschließend 8 Stunden lang bei einer Temperatur von 78°C unter Rückfluß erhitzt. Insgesamt werden 3,60 Mol an monofunktionellen Einheiten (2,98 Mol Trimethylsiloxy-, 0,28 Mol 5-Hexenyl-dimethylsiloxy- und 0,34 Mol verbrückende - $(CH_2)_3-Si(CH_3)_2O_{1/2}$- Einheiten) eingesetzt, das M:Q-Verhältnis beträgt somit 1,20. Das Reaktionsgemisch wird mit 20 g 10-%iger NaOH in Wasser versetzt und danach werden im Verlauf von 1 Stunde 330 g Destillat abgenommen. Die Reaktionsmasse wird anschließend mit 500 ml Cyclohexan und 10 g 10-%iger NaOH in Wasser versetzt und danach werden 100 g Wasser/Ethanolgemisch während einer Dauer von 1 - 2 Stunden bis zum Erreichen einer Kopftemperatur von 80°C azeotrop abdestilliert. Im Anschluß daran wird das mit Ausnahme von ausgefallenem Natriumsulfat homogene Reaktionsgemisch mit 6 g $H_3PO_4$ (85% in Wasser) angesäuert, für eine Dauer von 1 Stunde bei 60°C gerührt, anschließend mit 100 g 15 %iger $Na_3PO_4.12H_2O$-Lösung in Wasser versetzt und weitere 15 Minuten bei 60°C gerührt. Danach werden während einer Dauer von 60-90 Minuten 100 g Wasser/Ethanolgemisch bis zum Erreichen einer Kopftemperatur von 80°C azeotrop abdestilliert und weitere 100 ml Cyclohexan destillativ entfernt.

Nach Filtration werden 790 g einer 60%igen, neutralen Harzlösung in Cyclohexan erhalten. Der Gehalt an Restethoxygruppen im Harz beträgt 3,8 Molprozent bezogen auf Gesamtsilizium. Die Ausbeute an Alkenylgruppen aufweisendem, harzartigem Siloxancopolymeren liegt somit bei 94% der Theorie. Die Viskosität einer 50%igen Lösung dieses Siloxancopolymeren in Cyclohexan beträgt 4,2 cSt.

**Vergleichsbeispiel 2**

Die in Beispiel 3 angegebene Arbeitsweise wird wiederholt mit der Abänderung, daß anstelle der Eduktmischung aus Beispiel 3 von einer Mischung aus 269 g (1,66 Mol) Hexamethyldisiloxan, 41,7 g (0,14 Mol) 1,3-Bis(5-hexenyl)tetramethyldisiloxan, 450 g Tetraethoxysilan mit einem 40%igen $SiO_2$-Anteil (käuflich erhältlich unter der Bezeichnung TES 40 bei der Wacker-Chemie GmbH, München; entspricht 3,00 Mol $SiO_2$-Einheiten), 110 g Wasser und 33 g 10%iger $H_2SO_4$ in Wasser ausgegangen wird. Insgesamt werden wie in Beispiel 3, 3,60 Mol an monofunktionellen Einheiten (3,32 Mol Trimethylsiloxy- und 0,28 Mol 5-Hexenyl-dimethylsiloxyeinheiten) eingesetzt; das M:Q-Verhältnis beträgt wiederum 1,20, wobei hier keine verbrückend wirkenden monofunktionellen Einheiten eingesetzt werden. Nach Filtration werden 770 g einer 61 %igen, neutralen Harzlösung in Cyclohexan erhalten. Der Gehalt an Restethoxygruppen im Organopolysiloxanharz beträgt 3,7 Molprozent bezogen auf Gesamtsilicium. Die Ausbeute an Organopolysiloxanharz liegt somit bei 95% der Theorie. Die Viskosität einer 50%igen Lösung des Organopolysiloxanharzes in Cyclohexan beträgt 3,2 cSt.

**Patentansprüche**

1. Alkenylgruppen aufweisende Siloxancopolymere enthaltend
   (a) Siloxaneinheiten der Formel

$$R_a Si(OR^1)_b O_{\frac{4-(a+b)}{2}} \qquad (I),$$

worin

R     gleich oder verschieden sein kann und aliphatisch gesättigte, gegebenenfalls halogenierte organische Reste bedeutet,

$R^1$     gleiche oder verschiedene Alkylreste, die durch Ethersauerstoffatome substituiert sein können, oder Wasserstoffatom bedeutet,

a     0, 1, 2 oder 3,

b     0, 1 oder 2,

und die Summe a + b nicht größer als 3 ist,

EP 0 607 869 B1

mit der Maßgabe, daß pro Molekül mindestens zwei Siloxaneinheiten (a) mit $a+b=0$ vorhanden sind,

(b) je Molekül mindestens eine Siloxaneinheit der Formel

$$AR_c SiO_{\frac{3-c}{2}} \qquad (II),$$

worin

R eine der obengenannten Bedeutung hat,

c 0, 1 oder 2 ist und

A einen Rest der Formel

$$-CH_2CHR^3\text{-}R^2\text{-}CR^3=CH_2$$

bedeutet, wobei $R^2$ einen zweiwertigen Kohlenwasserstoffrest mit 1 bis 25 Kohlenstoffatomen und $R^3$ Wasserstoffatom oder einen Alkylrest bedeutet, und

(c) je Molekül durchschnittlich mindestens eine Siloxaneinheit der Formel

$$O_{\frac{3-c}{2}}R_c Si\text{-}A^1\text{-}SiR_c O_{\frac{3-c}{2}} \qquad (III),$$

worin R und c eine der obengenannten Bedeutungen haben und $A^1$ einen Rest der Formel

$$-CH_2CHR^3\text{-}R^2\text{-}CHR^3CH_2\text{-}$$

bedeutet mit $R^2$ und $R^3$ gleich der obengenannten Bedeutung.

2. Alkenylgruppen aufweisende Siloxancopolymere gemäß Anspruch 1, dadurch gekennzeichnet, daß sie aus $SiO_2$-Einheiten (Q-Einheiten) und $R_3SiO_{1/2}$-, $AR_2SiO_{1/2}$- sowie $O_{1/2}R_2Si\text{-}A^1\text{-}SiR_2O_{1/2}$-Einheiten (M-Einheiten) bestehen, wobei R, A und $A^1$ die in Anspruch 1 angegebene Bedeutung haben.

3. Alkenylgruppen aufweisende Siloxancopolymere gemäß Anspruch 1 oder 2, dadurch gekennzeichnet, daß es sich um solche der Formel

$$[R_3SiO_{1/2}]_s [AR_2SiO_{1/2}]_t [A^1_{1/2}\text{-}SiR_2O_{1/2}]_u [SiO_2]_v$$

handeln mit einem Verhältnis $(s+t+u)/v$ von 0,5 bis 1,5.

4. Alkenylgruppen aufweisende Siloxancopolymere gemäß Anspruch 3, dadurch gekennzeichnet, daß das Verhältnis $(s+t+u)/v$ 0,5 bis 1,5, das Verhältnis $t/s$ 0,05 bis 0,2 und das Verhältnis $u/(s+t)$ 0,01 bis 0,2 beträgt.

5. Verfahren zur Herstellung von Alkenylgruppen aufweisenden Siloxancopolymeren, dadurch gekennzeichnet, daß
in einer 1. Stufe
mindestens ein Silan der Formel

$$R_dSi(OR^4)_{4-d} \qquad (IV),$$

wobei

R gleich oder verschieden sein kann und aliphatisch gesättigte, gegebenenfalls halogenierte

14

organische Reste bedeutet,

$R^4$    gleich oder verschieden sein kann und Alkylrest bedeutet und

d    0, 1, 2 oder 3 ist,

und/oder dessen (Teil)hydrolysat, mit der Maßgabe, daß mindestens ein Silan der Formel (IV) mit d gleich 0 und/oder dessen Teilhydrolysat eingesetzt wird,

und Organosiloxan der durchschnittlichen Formel

$$A[SiR_2O(R_2SiO)_eR_2Si\text{-}A^1\text{-}]_fSiR_2O(R_2SiO)_eR_2SiA \qquad (V),$$

wobei R, A und $A^1$ die in Anspruch 1 genannte Bedeutung haben, e gleich oder verschieden sein kann und 0 oder eine ganze Zahl von 1 bis 100 bedeutet und f eine Zahl größer 0 und kleiner oder gleich 10 ist,

sowie gegebenenfalls Organosiloxan der Formel

$$(R_2SiO)_g \qquad (VI),$$

wobei R gleich oder verschieden sein kann und aliphatisch gesättigte organische Reste bedeutet und g eine ganze Zahl im Wert von 3 bis 8 ist,

mit Wasser in Gegenwart von Säure sowie gegebenenfalls weiteren Stoffen umgesetzt werden und

in einer 2. Stufe

die in der 1. Stufe erhaltene Reaktionsmasse in Anwesenheit von Base sowie gegebenenfalls weiteren Stoffen umgesetzt wird.

6.  Verfahren nach Anspruch 5, dadurch gekennzeichnet, daß als Organosiloxan der Formel (V) die Umsetzungsprodukte aus 1,5-Hexadien und/oder 1,9-Decadien mit 1,1,3,3-Tetramethyldisiloxan eingesetzt werden.

7.  Verfahren nach Anspruch 5 oder 6, dadurch gekennzeichnet, daß

in einer 1. Stufe

mindestens ein Silan der Formel

$$R_dSi(OR^4)_{4-d} \qquad (IV),$$

wobei R, $R^4$ und d die in Anspruch 5 angegebene Bedeutung haben,

und/oder dessen (Teil)hydrolysat, mit der Maßgabe, daß mindestens ein Silan der Formel (IV) mit d gleich 0 und/oder dessen Teilhydrolysat eingesetzt wird, und Organosiloxan der durchschnittlichen Formel

$$A[SiR_2O(R_2SiO)_eR_2Si\text{-}A^1\text{-}]_fSiR_2O(R_2SiO)_eR_2SiA \qquad (V),$$

wobei R, A, $A^1$, e und f die in Anspruch 5 angegebene Bedeutung haben,

sowie gegebenenfalls Organosiloxan der Formel

$$(R_2SiO)_g \qquad (VI),$$

wobei R und g die in Anspruch 5 angegebene Bedeutung haben,

mit Wasser in Gegenwart von mehrprotoniger Säure sowie gegebenenfalls weiteren Stoffen umgesetzt werden, anschließend durch Basenzugabe die Säure zum Teil neutralisiert wird und dann die entstandene Verbindung $R^4OH$ zumindest zum Teil abdestilliert wird,

in einer 2. Stufe

die in der 1. Stufe erhaltene homogene Reaktionsmasse in Anwesenheit von Base sowie wasserunlöslichem organischen Lösungsmittel umgesetzt wird und Wasser sowie Verbindung $R^4OH$ abdestilliert werden,

in einer 3. Stufe

die in der 2. Stufe erhaltene homogene Reaktionsmasse mit mehrprotoniger Säure und/oder deren Salze durch Pufferung auf einen pH-Wert zwischen 6 und 8 eingestellt wird, Wasser und gegebenenfalls noch vorhandene Verbindung $R^4OH$ abdestilliert wird und das ausgefallene Salz abfiltriert wird sowie

gegebenenfalls in einer 4. Stufe
die in der 3. Stufe erhaltene homogene Reaktionsmasse von wasserunlöslichem organischen Lösungsmittel befreit wird.

**8.** Vernetzbare Zusammensetzungen, die
   (A) Alkenylgruppen aufweisendes Siloxancopolymer gemäß einem oder mehreren der Ansprüche 1 bis 4 oder herstellbar nach einem oder mehreren der Ansprüche 5 bis 7,
   (B) Si-gebundenen Wasserstoff aufweisendes Organopolysiloxan und
   (C) die Anlagerung von Si-gebundenem Wasserstoff an aliphatische Doppelbindung fördernden Katalysator
enthalten.

**9.** Verwendung der Zusammensetzungen gemäß Anspruch 8 zur Herstellung von klebrige Stoffe abweisenden Überzügen.

**Claims**

**1.** Siloxane copolymer containing alkenyl groups, comprising
   (a) siloxane units of the formula

$$R_a Si(OR^1)_b O_{\frac{4-(a+b)}{2}} \qquad\qquad (I)$$

   in which
   R     can be identical or different and denotes aliphatically saturated, if appropriate halogenated, organic radicals,
   $R^1$   denotes identical or different alkyl radicals, which can be substituted by ether oxygen atoms, or hydrogen atom,
   a     is 0, 1, 2 or 3,
   b     is 0, 1 or 2
   and the sum of $a + b$ is not greater than 3,
   with the proviso that at least two siloxane units (a) where $a + b = 0$ are present per molecule,
   (b) per molecule, at least one siloxane unit of the formula

$$AR_c SiO_{\frac{3-c}{2}} \qquad\qquad (II)$$

   in which
   R     has one of the abovementioned meaning [sic],
   c     is 0, 1 or 2 and
   A    denotes a radical of the formula

   $-CH_2CHR^3-R^2-CR^3=CH_2$

   in which $R^2$ denotes a divalent hydrocarbon radical having 1 to 25 carbon atoms and $R^3$ denotes a hydrogen atom or an alkyl radical,
   and

(c) per molecule, on average at least one siloxane unit     of the formula

$$O_{\frac{3-c}{2}}R_cSi\text{-}A^1\text{-}SiR_cO_{\frac{3-c}{2}} \qquad\qquad (III)$$

in which R and c have one of the abovementioned meanings and $A^1$ denotes a radical of the formula

$-CH_2CHR^3\text{-}R^2\text{-}CHR^3CH_2-$

where $R^2$ and $R^3$ have the abovementioned meaning.

2. Siloxane copolymer containing alkenyl groups according to Claim 1, characterized in that it comprises $SiO_2$ units (Q units) and $R_3SiO_{1/2}$, $AR_2SiO_{1/2}$ and $O_{1/2}R_2Si\text{-}A^1\text{-}SiR_2O_{1/2}$ units (M units), in which R, A and $A^1$ have the meaning given in Claim 1.

3. Siloxane copolymer containing alkenyl groups according to Claim 1 or 2, characterized in that it is a siloxane copolymer of the formula

$[R_3SiO_{1/2}]s$ $[AR_2SiO_{1/2}]_t$ $[A^1{}_{1/2}\text{-}SiR_2O_{1/2}]_u$ $[SiO_2]_v$

with a ratio of $(s + t + u)/v$ of 0.5 to 1.5.

4. Siloxane copolymer containing alkenyl groups according to Claim 3, characterized in that the ratio $(s + t + u)/v$ is 0.5 to 1.5, the ratio t/s is 0.05 to 0.2 and the ratio $u/(s + t)$ is 0.01 to 0.2.

5. Process for the preparation of a siloxane copolymer containing alkenyl groups, characterized in that
in a 1st stage,
at least one silane of the formula

$R_dSi(OR^4)_{4-d}$    (IV)

in which
    R     can be identical or different and denotes aliphatically saturated, if appropriate, halogenated organic radicals,
    $R^4$    can be identical or different and denotes an alkyl radical and
    d     is 0, 1, 2 or 3,
and/or a (partial) hydrolysate thereof, with the proviso that at least one silane of the formula (IV) where d is 0 and/or a partial hydrolysate thereof is employed, and an organosiloxane of the average formula

$A[SiR_2O(R_2SiO)_eR_2Si\text{-}A^1\text{-}]_fSiR_2O(R_2SiO)_eR_2SiA$    (V)

in which R, A and $A^1$ have the meaning given in Claim 1, e can be identical or different and denotes 0 or an integer from 1 to 100 and f is a number greater than 0 and less than or equal to 10,
and if appropriate an organosiloxane of the formula

$(R_2SiO)_g$    (VI)

in which R can be identical or different and denotes aliphatically saturated organic radicals and g is an integer having a value from 3 to 8, are reacted with water in the presence of an acid and if appropriate other substances, and
in a 2nd stage
the reaction mass obtained in the 1st stage is reacted in the presence of a base and if appropriate other substances.

6. Process according to Claim 5, characterized in that a reaction product of 1,5-hexadiene and/or 1,9-decadiene with 1,1,3,3-tetramethyldisiloxane is employed as the organosiloxane of the formula (V).

7. Process according to Claim 5 or 6, characterized in that
in a 1st stage
at least one silane of the formula

$$R_dSi(OR^4)_{4-d} \qquad (IV)$$

in which R, $R^4$ and d have the meaning given in Claim 5, and/or a (partial) hydrolysate thereof, with the proviso that at least one silane of the formula (IV) where d is 0 and/or a partial hydrolysate thereof is employed, and an organosiloxane of the average formula

$$A[SiR_2O(R_2SiO)_eR_2Si\text{-}A^1\text{-}]_fSiR_2O(R_2SiO)_eR_2SiA \qquad (V)$$

in which R, A, $A^1$, e and f have the meaning given in Claim 5,
and if appropriate an organosiloxane of the formula

$$(R_2SiO)_g \qquad (VI)$$

in which R and g have the meaning given in Claim 5, are reacted with water in the presence of a polyproton acid and if appropriate other substances, the acid is then partly neutralized by addition of a base and at least some of the resulting compound $R^4OH$ is subsequently distilled off,
in a 2nd stage
the homogeneous reaction mass obtained in the 1st stage is reacted in the presence of a base and a water-insoluble organic solvent, and water and the compound $R^4OH$ are distilled off,
in a 3rd stage
the homogeneous reaction mass obtained in the 2nd stage is brought to a pH of between 6 and 8 by buffering with a polyproton acid and/or salts thereof, water and any compound $R^4OH$ still present are distilled off and the salt which has precipitated is filtered off, and
if appropriate, in a 4th stage
the homogeneous reaction mass obtained in the 3rd stage is freed from water-insoluble organic solvent.

8. Crosslinkable composition which comprises
(A) a siloxane copolymer containing alkenyl groups, according to one or more of Claims 1 to 4 or which can be prepared according to one or more of Claims 5 to 7,
(B) an organopolysiloxane containing Si-bonded hydrogen and
(C) a catalyst which promotes addition of Si-bonded hydrogen onto an aliphatic double bond.

9. Use of a composition according to Claim 8 for the production of coatings which repel tacky substances.


**Revendications**

1. Copolymères de siloxane comportant des groupes alcényle, contenant
a) des motifs siloxane de formule

$$R_aSi(OR^1)_bO_{[4-(a+b)]/2} \qquad (I)$$

où
les radicaux R peuvent être identiques ou différents et représentent des résidus organiques à saturation aliphatique,
les radicaux $R^1$ sont des résidus alkyle identiques ou différents, qui peuvent être substitués par des atomes d'oxygène d'éther, ou encore des atomes d'hydrogène,
a vaut 0, 1, 2 ou 3,
b vaut 0, 1 ou 2,
et la somme a + b n'est pas supérieure à 3,
du moment que l'on a par molécule au moins deux motifs siloxane (a) avec a + b = 0,

18

b) par molécule, au moins un motif siloxane de formule

$AR_cSiO_{(3-c)/2}$     (II)

où
  R a l'une des significations données ci-dessus,
  c vaut 0, 1 ou 2 et
  A est un radical de formule

$-CH_2CHR^3-R^2-CR^3=CH_2$

où $R^2$ est un radical hydrocarboné divalent de 1 à 25 atomes de carbone, et $R^3$ est un atome d'hydrogène ou un radical alkyle, et
c) par molécule, en moyenne au moins un motif siloxane de formule

$O_{(3-c)/2}R_cSi-A^1-SiR_cO_{(3-c)/2}$     (III)

où R et c ont l'une des significations données ci-dessus, et $A^1$ est un radical de formule

$-CH_2CHR^3-R^2-CHR^3CH_2-$

où $R^2$ et $R^3$ ont les significations données ci-dessus.

2. Copolymères de siloxane comportant des groupes alcényle selon la revendication 1, caractérisés en ce qu'ils sont constitués de motifs $SiO_2$ (motifs Q) et de motifs $R_3SiO_{1/2}$, $AR_2SiO_{1/2}$ et $O_{1/2}R_2Si-A^1-SiR_2O_{1/2}$ (motifs M), où R, A et $A^1$ ont les significations données dans la revendication 1.

3. Copolymères de siloxane comportant des groupes alcényle selon la revendication 1 ou 2, caractérisés en ce qu'il s'agit de copolymères de formule

$[R_3SiO_{1/2}]_s[AR_2SiO_{1/2}]_t[A^1{}_{1/2}-SiR_2O_{1/2}]_u[SiO_2]_v$

avec un rapport $(s+t+u)/v$ de 0,5 à 1,5.

4. Copolymères de siloxane comportant des groupes alcényle selon la revendication 3, caractérisés en ce que le rapport $(s+t+u)/v$ vaut de 0,5 à 1,5, le rapport $t/s$ vaut de 0,05 à 0,2 et le rapport $u/(s+t)$ vaut de 0,01 à 0,2.

5. Procédé pour préparer des copolymères de siloxane comportant des groupes alcényle, caractérisé en ce que :
  dans une première étape, on fait réagir avec l'eau, en présence d'un acide et éventuellement d'autres substances, un silane de formule

$R_dSi(OR^4)_{4-d}$     (IV)

dans laquelle
  les radicaux R peuvent être identiques ou différents et sont des résidus organiques à saturation aliphatique, éventuellement halogénés,
  les radicaux $R^4$ sont identiques ou différents, et représentent des résidus alkyle,
  d vaut 0, 1, 2 ou 3,
  et/ou son hydrolysat (partiel), du moment qu'on utilise au moins un silane de formule (IV) dans laquelle d vaut 1 et/ou son hydrolysat partiel,
  et un organosiloxane de formule moyenne

$A[SiR_2O(R_2SiO)_eR_2Si-A^1-]_fSiR_2O(R_2SiO)_eR_2SiA$     (V)

dans laquelle R, A et $A^1$ ont les significations données dans la revendication 1, les indices peuvent être identiques ou différents et valent 0 ou sont des nombres entiers de 1 à 100, et f est un nombre supérieur à 0 et inférieur ou égal à 10,
et éventuellement un organosiloxane de formule

$(R_2SiO)_g$     (VI)

dans laquelle les radicaux R peuvent être identiques ou différents et représentent des résidus organiques à saturation aliphatique, et g est un nombre entier compris entre 3 et 8, et
dans une deuxième étape, on fait réagir la masse réactionnelle obtenue dans la première étape, en présence d'une base et éventuellement d'autres substances.

6.  Procédé selon la revendication 5, caractérisé en ce qu'on utilise comme organosiloxanes de formule (V) les produits de la réaction du 1,5-hexadiène et/ou du 1,9-décadiène avec le 1,1,3,3-tétraméthyldisiloxane.

7.  Procédé selon la revendication 5 ou 6, caractérisé en ce que :
dans une première étape, on fait réagir avec de l'eau, en présence d'un polyacide et éventuellement d'autres substances, au moins un silane de formule

$R_dSi(OR^4)_{4-d}$     (IV)

dans laquelle R, $R^4$ et d ont les significations données dans la revendication 5,
et/ou son hydrolysat (partiel), du moment que l'on utilise au moins un silane de formule (IV) dans laquelle d vaut 0 et/ou son hydrolysat partiel,
et un organosiloxane de formule moyenne

$A[SiR_2O(R_2SiO)_eR_2Si-A^1-]_fSiR_2O(R_2SiO)_eR_2SiA$     (V)

dans laquelle R, A, $A^1$, e et f ont les significations données dans la revendication 5,
et éventuellement un organosiloxane de formule

$(R_2SiO)_g$     (VI)

dans laquelle R et g ont les significations données dans la revendication 5,
puis, par addition d'une base, on procède à une neutralisation partielle de l'acide, puis on chasse au moins par distillation le composé obtenu $R^4OH$ ;
dans une deuxième étape, on fait réagir la masse réactionnelle homogène obtenue dans la première étape, en présence d'une base ainsi que d'un solvant organique insoluble dans l'eau, et on chasse par distillation l'eau et le composé $R^4OH$,
dans une troisième étape, on ajuste à un pH compris entre 6 et 8, par un effet tampon, la masse réactionnelle homogène obtenue dans la deuxième étape, à l'aide d'un polyacide et/ou de ses sels, on chasse par distillation l'eau et le composé $R^4OH$ éventuellement encore présent, et on isole par filtration le sel précipité, et
éventuellement, dans une quatrième étape, on débarrasse des solvants organiques insolubles dans l'eau la masse réactionnelle homogène obtenue dans la troisième étape.

8.  Compositions réticulables contenant :
A) un copolymère de siloxane comportant des groupes alcényle selon l'une ou plusieurs des revendications 1 à 4, ou pouvant être préparé selon l'une ou plusieurs des revendications 5 à 7,
B) un polyorganosiloxane comportant des atomes d'hydrogène liés à Si, et
C) un catalyseur favorisant la fixation, sur une double liaison aliphatique, des atomes d'hydrogène liés à Si.

9.  Utilisation des compositions selon la revendication 8 pour réaliser des revêtements repoussant les substances adhésives.